Europäisches Patentamt

**European Patent Office**

**Office européen des brevets**

(11) Publication number: **0 005 134**
A2

## (12) EUROPEAN PATENT APPLICATION

(21) Application number: **79850037.7**

(22) Date of filing: **25.04.79**

(51) Int. Cl.²: **B 23 K 9/00**
**B 21 C 51/00**

(30) Priority: **26.04.78 SE 7804804**

(43) Date of publication of application:
**31.10.79 Bulletin 79/22**

(84) Designated Contracting States:
**BE DE FR GB IT NL**

(71) Applicant: **SSAB Svenskt Stal AB**
**Box 163 44**
**S-103 26 Stockholm(SE)**

(72) Inventor: **Bergstedt, Ulf**
**PL 7723**
**S-951 90 Lulea(SE)**

(74) Representative: **Burman, Tore et al,**
**Bergling & Sundbergh AB P.O.Box 7645**
**S-103 94 Stockholm(SE)**

(54) A method of and an apparatus for marking metal objects.

(57) A method of and an apparatus for marking metal objects, especially metal billets at high temperature, are disclosed. The marking will enable selective identification of the object in question. A marking head (3) is utilized, having at least one electrode (4) for providing character is built up in a matrix form on the object (1) by means of an electric arc process. The characters consist of matrix parts in the form of welded-on projections, in which case a consumable electrode is utilized, preferably in conjunction with the principles for gas metal arc welding, or alternatively of matrix parts in the form of recesses, in which case a non-consumable electrode is utilized, preferably in conjunction with the principles for plasma arc cutting. The marking head (3) preferably comprises a sequence of electrodes (4) which are activated selectively in conjunction with relative displacement between the marking head and the metal object (1) to provide the desired character matrix parts. By sensing that necessary electrode current has been consumed in conjunction with an activation of an electrode, a confirmation can be obtained that the desired character matrix part has actually been provided.

Fig. 1

## A METHOD OF AND AN APPARATUS FOR MARKING METAL OBJECTS

### Technical Field

The present invention relates to the marking of metal objects or articles such as metal billets, metal sections etc., especially objects made from steel and particularly objects having very high temperature, typically 700-1000°C.

The billets and sections produced in a steelworks or steel plant must be marked to enable later identification of the billets and sections. A minimum requirement is that a charge code or designation, usually comprising five characters, is provided on the billets or sections. It is often further required that a serial number, usually comprising two characters, is applied. Customers may also require that the billets or sections are marked according to an internal numbering or code of their own. In conjunction with continuous casting, there is often the requirement that a casting number is to be applied.

The marking, which must be sufficiently resistant and permanent to be undestroyed, inter alia during subsequent processing, handling and storage of the billets and sections, is today a very large problem for steelworks,

0005134

since there is no marking method which functions well and which is acceptable from the point of view of cost, as will be apparent from the following account of marking methods known at present.

Background Art

Manual marking can be done either by painting on characters or by separately stamping in each character. Such manual marking is expensive, uncertain (which leads to rejections and complaints) and has to be done in a very poor working environment for the one carrying it out (due to the very high temperature of the billets or sections). Neither does this manual marking give the possibi-lity of automatically reading markings in conjunction with later handling of the billets or sections.

A marking method which is often utilized today means that a stamping head is struck against the object to be marked by means of an impact cylinder driven by compressed air, so that digits arranged on the stamping head are impressed into the surface of the object. The digits are arranged on a number of parallel, separately settable digit wheels. Each digit wheel has ten digits distributed round its circumference, enabling setting an optional digit combination. The greatest disadvantage with this method is that if the surface on the billet which is to be marked is uneven (which is often the case), many characters can be unreadable or confusable. For example, an "8" can look like a "3", etc. Furthermore, the result of the marking is very sensitive to a possible angular misalignement between the stamping head and the billet and the mechanical stresses are very high due to large impact forces, which involves design problems. This, together with the combination of great heat and dirt at the digit wheel bearings or mountings, gives considerable risk of operational disturbances.

Another proposed marking method means that metal tags, on which are stamped the necessary characters, are being spiked onto a billet, for example, with the aid of special spikes. This method has the disadvantages of being expensive, that the tags easily fall off and that the complicated mechanism for shooting or driving the fastening spikes has been found to be very sensitive to disturbances in the difficult environment with heat and dirt in a steelworks. This marking method has not been found to have any practical use in conjunction with automated or remotely controlled operation.

A marking method in conjunction with casting metal billets has been proposed, which involves casting characters in one end of the metal billet. This is effected by using a plate of refractory meterial engraved with the necessary characters, which is placed in the mould before the molten metal is poured in. This method is difficult from the point of view of handling, however, and is naturally limited to use in connection with cast metal billets. The necessity of utilizing pre-engraved plates results in considerable limitation of the flexibility of the method and makes automated or remotely controlled operation impossible.

There is also a proposed marking method intended for semifinished or finished steel products, this method comprising spraying atomized molten metal onto the steel product through a stencil to form characters on the product. The atomized molten metal is obtained by melting a metal wire in a gas flame, the molten metal then being subjected to the action of compressed air, which also gives the necessary spraying action. The method is expensive and complicated and the use of stencils, i.a. makes the method unsuitable for automated or remotely controlled operation.

It has further been proposed, in conjunction with manufacturing metal objects involving heating the objects, to mark certain of the objects for the purpose of sorting or classification, by applying to them a dot or nugget of a material contrasting to the metal in the objects, e.g. copper if the objects are of steel. Such dots will thus be easy to observe, and the metal objects can be sorted or classified in a later stage of the process line in relation to the presence or absence of a contrasting marking dot. The dot on an object marked thus is applied by having a small amount of contrasting material transferred from the end of an electrode consisting of this material, which is brought into contact with the metal object, while an electric current impulse is passed through the electrode and object, so that an instantaneous arc occurs between electrode and object. The amount of material transferred from the electrode to the object is so adjusted that the dot obtained does not noticeably project from the surface of the object, and so that the surface material in the dot does not alloy with the metal in the object, but retains its contrasting effect. It will be easily seen that this marking method based on contrasting effect has substantial disadvantages and limitations. The method thus does not give any selectively identifying marking, and is therefore not suitable in cases where the original sequence between the metal objects at the time of marking is broken, which is generally the case in steelworks in conjunction with intermediate storage, for example. Application of the contrasting material in accordance with the above-mentioned conditions is furthermore delicate, and with the varying nature as well as the temperature of the metal object surface, it will be very difficult in practice to provide a dot which is both sufficiently well-fused and has retained its contrasting effect. This method has not come into any practical use either.

Object of the Invention

The object of the present invention is thus to provide a new method for marking, of the kind mentioned in the introduction, and which will, i.a.,meet the following requirements:

0005134

- Provide clear, easily-read characters, which are possible to read automatically;

- Provide correct characters even if the marking surface on the object is uneven, or if there is an angular misalignment between the object and the marking equipment;

- Enable automated or remotely controlled operation;

- Enable acknowledgement of the marking, i.e. verification that the right characters really have been provided;

- Marking shall be enabled while the object to be marked is either stationary or in motion;

- Comparatively simple equipment, which is operationally reliable and insensitive for the difficult operating environment (heat, dirt etc.) in a steelworks;

- Be rapid and have very good flexibility with regard to character size, number, type, etc.

Disclosure of the Invention

The objects set forth above are achieved by a method and an apparatus in accordance with the invention, having the characterizing features disclosed in the accompanying patent claims.

The inventive method for providing selectively identifying marking, particularly of very hot metal objects such as billets, sections and the like, especially from steel, is thus essentially characterized by providing in matrix form characters made by electric arc process, especially digits or numbers and/or letters, on the

0005134

surface of the metal object. For the electric arc process or treatment, there is utilized at least one electrode for applying electrode material to, or alternatively removing material from said surface on the metal object. The characters made in matrix form can consist of matrix parts in the form of dots and/or segments, thus constituting projections or alternatively recesses at the surface of the metal object.

It is possible to utilize only one electrode, but the marking procedure will be more slow and require considerable relative displacements between the electrode and the object to be marked. It is therefore preferable to work with a plurality of electrodes which are activated selectively. In this case, electrodes arranged in rows and columns in a welding head can be utilized, the latter being brought into adjacency or association with the metal object to be marked. Since this embodiment requires a large number of electrodes, e.g. 5 x 4 but preferably 7 x 4, the necessary electrode, current and gas supply equipment will be unnecessarily comprehensive.

According to a preferred embodiment of the method in accordance with the invention, a plurality of electrodes arranged in sequence, e.g. along a line or in zigzag, and spaced from each other, is utilized instead, the electrodes and the metal object being given relative movement (step-wise or continuous) in a direction substantially transverse to the general sequence direction, and along the surface of the metal object to be marked, an electrode being selectively activated when it has a position relative to said surface corresponding to a matrix part of the character which is to be provided on said surface. It will be appreciated that this relative movement can be provided, as desired, by the metal object moving past the electrodes and/or the electrodes being moved with the aid of suitable driving means. A computer is used to advantage for controlling the selective activation of the electrodes, e.g. in accordance with principles for so-called flying computer printout well-known to those skilled in the art.

Since characters made up in a matrix form are used here, the method in accordance with the invention provides the possibility of checking that the right character has been provided on the metal object, by sensing for which matrix part the required current has been consumed, and comparing the combination of matrix parts thus obtained with the combination of matrix parts applicable for the characters selected for marking. In other words, for each electrode selected and activated by a control unit, it is checked that a given current has passed through the electrode in question during a given time interval.

According to a first alternative of the method in accordance with the invention, characters are provided on the object to be marked by using arc welding to apply electrode material to the object. The principles preferably utilized here are those for gas metal arc welding,

0005134

i.e. gas arc welding with a consumable electrode. The use of such a method of application, especially in conjunction with a protective gas, has been found to enable build-ing up extremely well-defined characters on very hot metal objects. In other words, characters are obtained consisting of electrode material deposits standing up from the surface of the metal object and being well-defined and showing very insignificant flowout, which gives the basis for subsequent automatic reading, e.g. by utilizing laser techniques.

The electrode material applied should have a melting point not below the temperature of the metal object which is to be marked. The electrode material can suitably have substantially the same melting point as the metal in the object. In accordance with the invention, there is preferably utilized an electrode material having substantial-ly the same or similar analysis or composition as the metal in the object to be marked. This has the further advantage that no material is applied to the metal object which could be unfavourable with regard to the future use of the metal object.

If it is especially desired that the marking shall be maintained in its original condition, even after a long heating period, e.g. after treatment in a pre-heating furnace, it is advantageous to select an electrode material which is heat-resistant. In this case the surface of the electrode material deposits does not oxidise so easily, i. e. scale (which loosens later) is not formed, and, therefore, the marking will remain very well. The heat resistant electrode material can suitably be based on Fe and alloyed with Mo, Cr and Ni, for example.

In conjunction with gas metal arc welding, electrode feed and control of the welding current is done conventionally to provide the desired transference of electrode material. The utilization of this principle (with or without use of protective gas) gives, in connection with the present invention, the very substantial advantage that each surface portion of the metal object to be marked will always receive the appropriate electrode material deposit, even if the particular portion of the surface deviates in height from surrounding surface portions. The electrode feed or advance will namely take place until there is a suitable distance between the surface of the metal object and the end of the electrode, the self-adjusting arc then giving the correct transference of electrode material to the metal object. When utilizing this marking method there is therefore no risk that an incorrect or incomplete character will be obtained on the metal object as a result of surface irregularities on it, or as a result of a misalignement or a skewed position between the marking equipment and the metal object. Even curved surfaces on the metal object can thus be marked in accordance with the present invention.

According to a second alternative of the method in in accordance with the invention, characters are provided on the object to be marked by removing material from the surface of the object while using arc cutting. The principles for plasma arc cutting are preferably utilized here, particularly while using a so-called transferred arc.

It has been found that with such a marking method, there are obtained very well-defined and easily read recesses in the surface of the metal object. This is also the case for the highest conceivable temperatures of the metal object, e.g. in the order of magnitude of $1000^{\circ}C$, since such a temperature is still very low in comparison with the temperature prevailing in the cutting plasma arc, the latter being of the order of magnitude of $25.000 - 30.000^{\circ}C$. In consideration of this, and the fact that the plasma jet obtained in plasma cutting gives an effective blow-off of molten material from the surface of the metal object, there is no risk of any flowing together of the recesses obtained.

It has further been found that this marking method also gives comparatively good insensitivity to surface irregularities on the metal objects, or for a skewed setting between the metal object and the marking head being used, since the plasma arc obtained is well concentrated or constricted and gives good cutting action also for distances to the metal object to be marked which do not vary too greatly.

The apparatus in accordance with the invention for selectively identifying marking of very hot metal objects, such as billets, sections and the like, especially of steel, is substantially characterized in that it comprises a marking head for electric arc processing or treatment of the metal object, said marking head being intended for bringing up to the surface of the metal object intended for marking, and including at least one electrode; means for supplying gas around the electrode; means for current supply to said at least one electrode; means for giving the metal object to be marked and the marking head relative movement; and a control unit for controlling the abovementioned means for current supply and relative movement, so that said at least one electrode can be controlled to form a character executed in matrix form on the metal object.

According to a preferred embodiment of the apparatus in accordance with the invention, the marking head comprises a number of electrodes, preferably five or seven, arranged spaced from each other in sequence, e.g. along a line, there being means for giving the marking head and metal object relative movement substantially transverse or laterally with regard to the general sequence direction, and substantially along the surface of the metal object to be marked. In the simplest case, the apparatus can comprise a conventional associated supply equipment provided with a connecting hose array for each individual electrode in the marking head. The different sets of equipment can be remotely controlled by the control unit, which can include a computer.

If the relative movement between the marking head and the metal object takes place by the metal object being caused to pass by the stationary marking head, the latter can be extremely simple in its construction and be made substantially insensitive to the difficult operational environment adjacent the very hot metal object.

If, instead, the relative movement takes place by the marking head being given a substantially rectilinear movement along the object to be marked (which is the general case, e.g. when marking the end surfaces of metal billets), there is indeed the addition of necessary driving means for the marking head. These can, however, be made simple and operationally reliable, e.g. in the form of a hydraulic or pneumatic cylinder, and they thus do not constitute any risk for operational disturbances in spite of the difficult working environment.

It should be emphasized in this connection that the utilization of a connecting hose array between the marking head and the associated supply equipment used means that this equipment can be placed so that more protection is afforded, e.g. from heat from the metal objects to be marked, which gives substantially improved operational reliability. Flexible hose arrays further mean that the

14 0005134

marking head can easily be given movement relative to a
stationary object which is to be marked.

According to a first embodiment of the apparatus in
accordance with the invention, said at least one electrode
is a consumable welding electrode, the apparatus also comprising means for advancing or feeding the electrode towards the metal object. The advancing or feeding means are
also arranged for control by the control unit. Previously
mentioned means for supplying gas are arranged for supplying protective gas. The apparatus can to advantage include
a conventional so-called semi-automatic welding machine
(e.g. for MIG welding) for electrode feed, current supply
and protective gas supply. In this case, the welding torch
or gun of the customary welding hose array is removed, and
the array connected to the marking head, which suitably
contains an electrode holder with electrode and protective gas ducts or channels and with a connection for the
current conductor in the welding hose array. The control
unit  is connected to the semi-automatic welding machine
for controlling electrode feed from it and for controlling
the supply of welding current and protective gas.

According to a second embodiment of the apparatus in
accordance with the invention, said at least one electrode
is a non-consumable electrode. The gas supplied around
the electrode is a plasma gas, arranged to flow out
through a nozzle associated with the electrode and lying
between the arc and of the electrode and the metal object, suitably in accordance with principles for the design of plasma gas cutting equipment well-known to those skilled in the art. Previously mentioned means for current supply suitably comprise means for pilot current supply (for a pilot arc between the electrode and the nozzle) and means for cutting current supply (for the cutting arc between the electrode and the metal object), plasma cutting with so-called transferred arc being involved in this case.

The apparatus can to advantage include conventional supply equipment for plasma cutting comprising, i.a., a rectifier for supplying pilot current and plasma cutting current, and means for plasma gas supply and means for coolant supply. In this case, the plasma cutting torch provided on the customary hose array is removed, the array then being connected to the marking head. The control unit is connected to the equipment for controlling the pilot current, cutting current and plasma gas.

The invention will now be described in more detail by means of embodiment examples while referring to the attached drawings.

Brief Description of Drawings

Fig. 1 is a very schematic side view of a first embodiment of the apparatus in accordance with the invention.

Fig. 2 is a schematic front view of the marking head incorporated in the apparatus according to Fig. 1.

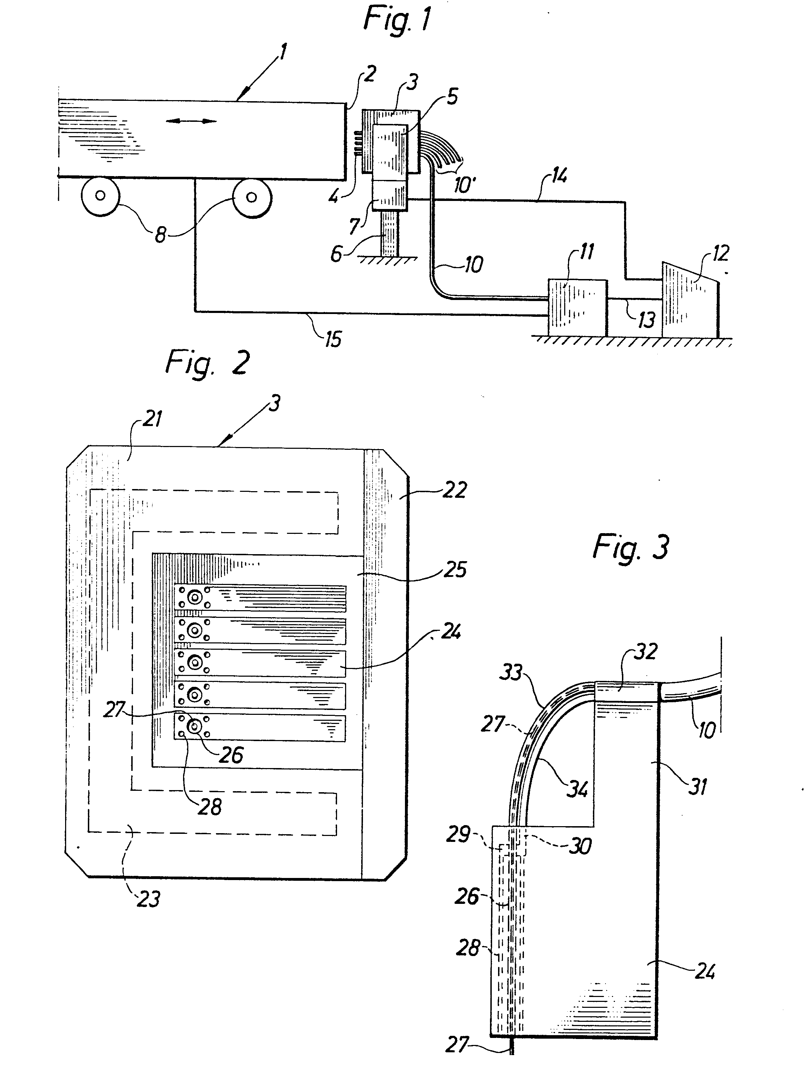

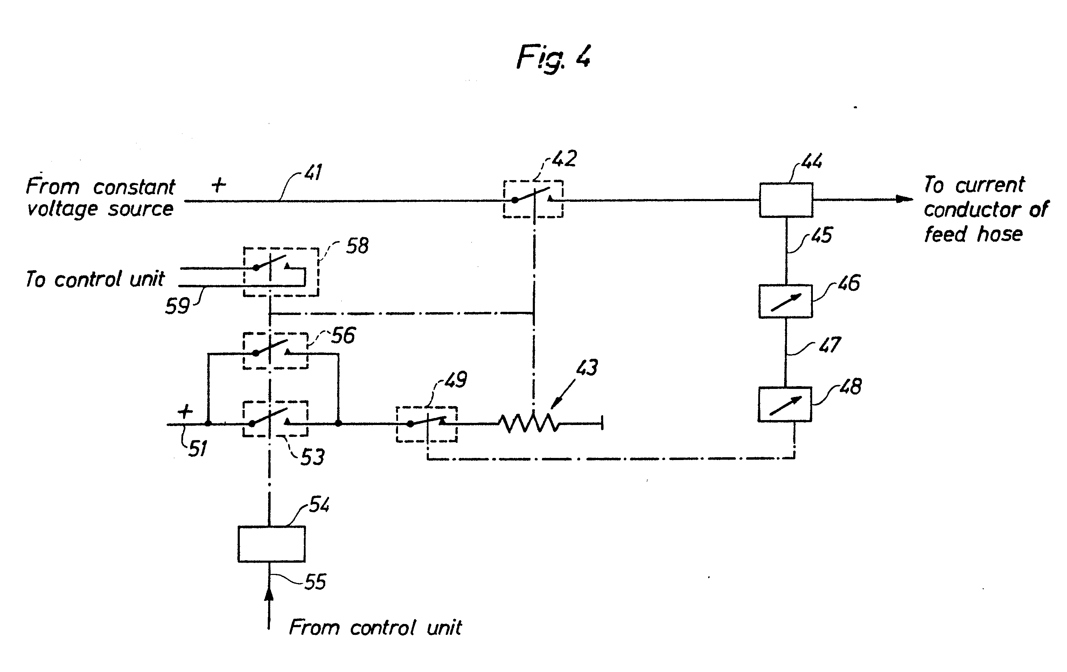

Fig. 3 is a schematic plan view of an electrode holder included in the marking head according to Fig. 2, the figure also illustrating how the associated hose array for electrode feed and current and protective gas supply is connected to the electrode holder. Fig. 4 is a diagram of a circuit for controlling the electrode current and acknowledging that the required electrode current has been consumed. Fig. 5 is a schematic view from the front of a second embodiment of a marking head included in the apparatus according to the invention. Fig. 6 shows a schematic section through an electrode holder or cutting torch included in the marking head according to Fig. 5, the figure also illustrating how the associated hose array for supplying plasma cutting current, pilot current and plasma cutting gas is connected to the electrode holder or cutting torch.

Description of Preferred Embodiments

The apparatus shown in Fig. 1 is intended for marking the end surface 2 of a metal billet 1 by means of welding. The apparatus includes a marking head 3 with five welding or marking electrodes 4 spaced vertically from each other. The marking head 3 is fastened to a holder 5, in turn attached to a driving unit 7 arranged on a floor stand 6.

The metal billet 1 lies on a conveyor having conveying rollers 8, said conveyor being arranged to bring the billet 1 into a stationary marking position adjacent to the marking head, i.e. so that the end face of the billet is substantially parallel to, and at a small distance from the marking head (a typical distance is a few cm), and so that the electrodes 4 are just inside the side edge of the end face. The latter is not necessary, however, since this position can be achieved by the movement of the marking head 3.

The driving unit 7 is arranged to give the holder 5, and thereby the marking head 3, a constant linear movement horizontally and at right-angles to the plane of the paper in Fig. 1, i.e. along the end surface 2 of the billet 1, which can be regarded as substantially flat.

Each of the electrodes 4 is connected via a separate, flexible supply or feed hose 10 to an associated so-called semi-automatic welding machine 11 (primarily intended for MIG or MAG welding). This can be of the ESAB A10-125K type, for example. For the purpose of simplification, only one welding machine and its connection to the associated electrode 4 via the hose 10 has been shown in Fig. 1, the remaining four hoses only being indicated at 10'. The semi-automatic welding machines 11 are connected to a control unit 12 via an associated control lead 13. The control unit 12 is furthermore connected to the driving unit 7 via a control lead 14.

Each welding machine 11 includes a constant voltage power supply with means for its controlled connection to the associated electrode 4, an electrode reel and electrode feed means arranged for controlled activation, as well as a source of protective gas, e.g. argon. The

電005134

electrode thus runs from the electrode reel or coil via the electrode feed means and inside a duct in the feed hose 10 to the marking head 3. The protective gas is similarly supplied inside a separate duct in the feed hose 10. The latter also includes a current conductor for the electrode current, which is circuited from the billet 1 to the semi-automatic welding machine via a lead 15.

An example of the marking head construction, and the connection of the feed hoses to the marking head is shown in Figs. 2 and 3. The schematically shown marking head 3 comprises a steel casing consisting of a lying U-shaped member 21 and a side plate 22 closing member 21. The member 21, which can include cooling water ducts 23, only indicated here, encloses five flat copper electrode holders 24, insulated from each other and from the steel casing by insulation 25. The holders 24 are arranged horizontally one above the other, and each has on the left-hand side in the figure, a through-hole 26 with a diameter of 2 mm, for example. Through which the associated electrode 27 is passed for advancing towards the metal billet 1. Exiting distributed round the outlet opening of the hole 26 there are four smaller canals 28, out of which protective gas flows to surround the associated welding location. The four canals 28 run parallel to the channel 26 to the rear part of the electrode holder, where they connect to a duct 29 circumferencing channel 26, which in turn is in communication with a connecting duct 30, opening out in the rear portion of the electrode holder 24 beside the inlet opening of the channel 26. As is apparent from Fig. 3, the electrode holder 24 has a rectangular extension 31 on its right rear portion, the purpose of which will be apparent from the following account of how the feed hose 10 is connected.

The feed hose 10 is attached to the right, rear extended end portion 31 of the electrode holder 24, with the help of connecting means 39, not shown further. The connection is such that the current conductor of the feed hose 10 is in electrical contact with the electrode holder 24. The direction of the hose 10 at the point of connection is transverse the electrode advance direction, i.e. transverse to the longitudinal direction of the electrode holder. The inner tube 33 of the feed hose 10 for the electrode 27 can have a typical diameter of between 0.6 and 1.5 mm, and is taken further in a curve for connection to the rear opening of the through-hole 26 in a suitable way, not shown further here. Since in this way the electrode 27 is given a change of direction of about $45^{o}$, for example, the electrode will be pressed against the left-hand side of the hole 26 as it is being advanced. Good electrical contact between the electrode 27 and the electrode holder 24, with accompanying good current transference from the electrode holder to the electrode, is thus ensured. The second inner tube 34 of the feed hose 10, for the supply of protective gas, is similarly taken further and connected to the duct 30 in a suitable way not shown further here.

In Fig. 4 there is shown an example of the principle design of a circuit which can be utilized in conjunction with the present invention for controlling the total electrode current at each activation, and for giving an acknowledgement signal for it.

A current conductor 41 from the constant voltage power source (direct current) of the respective electrode is via a first normally open contact 42 of a contactor 43 and a current meter circuit 44 connected to the current conductor of the associated feed hose. The output of current meter circuit 44, on which is obtained a signal proportional to the current passing through conductor 41, is connected to the input of an adjustable level discriminator circuit 46 via a lead 45. The discriminator circuit 46 gives an output signal as long as the input signal, that is the current in the conductor 41, exceeds a predetermined set value, e.g. 50 A. Said output signal is applied to the input of an adjustable time control circuit or timer 48 via a lead 47. The circuit 48 is arranged so that when it has received an input signal for a given set total period of time, it temporarily switches a contact 49 which is normally closed and connected in series to the current supply lead 51 to the contactor 43. It is pointed out here that the design and function of the circuits 44,

21

46 and 48 are wellknown for those skilled in the art and therefore do not need to be described in greater detail.

A normally open contact 53 is also connected in series to the current supply lead 51 to the contactor 43. The contact 53 is arranged for temporarily closing by means of a preselecting circuit 54, when the latter receives a control signal on a lead 55 from the control unit. In parallel across the contact 53 there is connected a normally open, self-excitation contact 56 for the contactor 53.

A normally open contact 58 is also associated to the contactor 43, the former being connected to a computer signal lead 59.

The mode of operation for the circuit according to Fig. 4 is in short as follows. When the circuit and associated electrode is to be activated, a control pulse comes from the control unit on lead 55, circuit 54 then causing contact 53 to be temporarily closed. Current is thus supplied to contactor 43 via the closed contact 49, and contact 56 closes, the contactor thereby being given self-excitation and remains energized even after contact 53 goes open again. Simultaneously, contact 42 in the electrode current conductor 41 is closed, whereby current supply to the electrode is started. When the current in conductor 41 has risen to a previously determined level and thereby the output signal from circuit 44 also, the circuit 46 is activated and activates in its turn timer 48

0005134

When the latter has been activated for a predetermined time, contact 49 is caused to open, cutting off the current supply to contactor 43 and contacts 42, 56 and 58 return to their respective initial states. The current supply in conductor 41 is thus cut off.

When it returns to its initial state, contact 58, which closed when contactor 43 was energized, will cause an acknowledgement signal in the control unit. This signal is a confirmation that sufficiently high current has passed through current conductor 41 for a sufficiently long time. It will be easily appreciated that the control unit can be arranged for ascertaining that the acknowledgement signal has been obtained within a predetermined period of time after the control signal has been sent out on lead 55.

It will be similarly appreciated that the electrode feed or advance can to advantage be controlled by a contact incorporated in contactor 43, although this is not shown in Fig. 4.

A marking operation utilizing the apparatus described in Fig. 1 takes place in the following mode.

To start off with, metal billet 1 is brought into a marking position relative to marking head 3. Control unit 12 then activates driving unit 7, which begins to move marking head 3 with constant speed along the end face of billet 1. When the electrodes 4 are at a suitable distance in over the end face 2 of the billet (which could be determined automatically with the help of suitable limit switches) the electrodes are activated in accordance with the character or characters which are to be made. For each column in a character matrix, the electrodes which are to deposit material on the billet to form a part of a character are thus activated simultaneously. Activation in this case means that the feed or advancing means for the respective electrode begins to advance the electrode at a constant speed, that the constant voltage power source and the current control circuit for the respective electrode are switched on, and that the protective gas supply for the respective electrode is coupled in. All this takes place during a given, predetermined time corresponding to the deposition of elongate dots or dashes of desired length. Typically, these can be about 4 mm long and then have a principle hemispherical shape. After the given time, there is a general de-activation of the electrodes for a time corresponding to the movement of the electrodes to the next column of the character matrix. The electrodes which are to provide character parts in this column are then energized, and so on. The process continues until a desired number of characters (with suitable spacing) has been provided, subsequent to which control unit 12 causes drive unit 7 to return the marking head to its starting position. The apparatus is then ready to carry out a new marking operation.

The marking head 103 illustrated in Figs. 5 and 6 is intended for utilization in an apparatus for marking by means of plasma cutting. The marking head can be arranged in an apparatus with the same construction as the one shown in Fig. 1. However, in such a case, the semi-automatic welding machines shown in Fig. 1 are exchanged for corresponding supply equipments for plasma cutting and the respective hose array is adapted hereto.

Marking head 105 is generally executed in the same way as marking head 5 in the apparatus according to Figs. 1-5. Marking head 105 thus comprises a metal casing consisting of a U-shaped member 121 and a side plate 122, five flat electrode holders or marking torches 124 and insulation 125, which insulates the marking torches from each other and from the casing. The marking torches 124 are arranged spaced vertically one above the other. Each of the torches has threaded into the middle of its end surface facing towards the object to be marked a plasma nozzle 126, made from copper, for example, with a plasma arc orifice 127.

Each marking torch (see Fig. 6) comprises a forward, electrically conductive copper part 131, a rear, electrically conductive copper part 132 and an intermediate insulator 133. The non-consumable electrode 135, which can be of tungsten, is electrically and mechanically connected to rear part 132, and extends through a canal 136 made in insulator 133 and forward part 131, up to the vicinity of the plasma arc orifice 127 in the plasma nozzle 126 fastened into the opening of canal 136. In rear part 132 there is a plasma gas feed duct 137, leading to canal 136 from the rear side of rear part 132.

Cooling water channels 138, 139 extend through parts 131, 132 and insulator 133 from the rear side of part 132. Channels 138, 139 are in communication with each other via transverse channels, not shown, in forward part 131. The cooling water channels are in communication with a suitable cooling unit (not shown) via ducts 140, 141 connected to the openings of channels 138 and 139 at the rear of part 132.

Via an associated hose array 143, there is taken to each marking torch 124 an electrode current conductor 144, a pilot current conductor 145 and a plasma gas tube 146. Electrode current conductor 144 is connected to the rear side of rear part 132, and pilot current conductor 145 to the rear of forward part 131. Plasma gas tube 146 is connected to the opening of canal 137 on the rear side of rear part 132.

The hose array is taken to a supply equipment (corresponding to unit 11 in Fig. 1) comprising two direct current sources with a falling characteristic, one for the pilot arc between electrode 135 and nozzle 126, and the other for the arc between electrode 135 and the metal billet to be marked. The equipment also comprises means for controlled switching in and out of the direct current sources and conventional means for igniting the pilot arc.

It is pointed out that it is naturally possible to

0005134

have a common cooling unit and a common gas supply unit for the five marking torches in the marking head.

A marking operation utilizing a marking head in accordance with Figs. 5 and 6, with construction of the apparatus otherwise in accordance with what is apparent from Fig. 1, takes place in principle in the same way as previously described with reference to Fig. 1. However, in this case, plasma gas is initially applied to all the marking torches, this gas being preferably argon, and a pilot arc is ignited between the electrode and plasma nozzle of the respective marking torch. A hot and electrically conductive gas will thus flow out through each of the orifices in the nozzles.

The marking sequence proper is started subsequent hereto, the marking torches being activated selectively to provide the desired character matrix parts. Activation means that the current source for the plasma cutting current is connected to the electrode of the appropriate marking torch. A cutting plasma gas jet is thus obtained from the nozzle orifice of the marking torch, said jet causing a recess on the metal billet, the depth or length of said recess depending on how long the marking torch has been activated. Circuits of the kind apparent from Fig. 4 can be utilized for activation.

It will be appreciated that utilization of the described apparatuses enables the provision of a row of distinct characters built up in the form of a dot matrix, for example. These can be made even more easily readable
if seven electrodes are utilized instead of five. The use
of seven electrodes also has the advantage that the height
and position of the characters provided can be easily
varied in response to the available marking space on the
metal object to be marked, by being able to select working with either seven or five electrodes. In the latter
case, these five electrodes can be the five upper, or the
five lower, or the five middle electrodes.

It is further emphasized that marking in accordance
with the present invention makes it possible to provide
characters in the forms of trade marks, special symbols
and so on according to particular desires.

Claims

1. A method of selectively, identifiably marking very hot metal objects such as billets, sections and the like, especially of steel, characterized by providing characters on the metal object by electric arc processing, the metal object being marked in matrix form to form characters especially digits and/or letters, while using at least one electrode.

2. A method as claimed in claim 1, characterized by marking the metal object in matrix form, by selective activation of electrodes arranged in rows and/or columns and in association with the surface of the metal object which is to be marked.

3. A method as claimed in claim 2, characterized in that a plurality of sequentially spaced electrodes are utilized the electrodes and the metal object being given relative movement in a direction substantially transverse to the general sequence direction, and substantially parallel to the surface to be marked on the metal object, an electrode being selectively activated when it has a position relative to said surface corresponding to a matrix part of the character to be provided on said surfac

4. A method as claimed in any of claims 1-3, characteriz ed by checking that a correct character is provided on the metal object by sensing for which matrix parts the necessary electrode current for marking on the metal object is consumed and comparing the combination of matrix parts thus obtained with the combination of matrix parts applicable for the character selected for marking.

5. A method as claimed in any of claims 1-4, characterized by applying by welding electrode material to the metal object in the form of matrix parts.

6. A method as claimed in claim 5, characterized by utilizing the principles of gas metal arc welding, preferably while using a protective gas.

7. A method as claimed in claim 5 or 6, characterized by utilizing an electrode material which has substantially the same or similar analysis as the metal object.

8. A method as claimed in any of claims 1-4, characterized by selectively removing by cutting material from the metal object in the form of matrix parts.

9. A method as claimed in claim 8, characterized by utilizing the principles for plasma cutting.

10. An apparatus for selectively, identifiably marking very hot metal objects such as billets, sections and the like, especially of steel, characterized in that it comprises a marking head for electric arc processing, said marking head being arranged for placing adjacent the surface of the metal object intended for marking and including at least one electrode for applying material from the electrode to, or alternatively removing material from said surface of the metal object, utilizing an electric arc; means for supplying gas round the electrode; means for current supply to said at least one electrode; means for giving the metal object to be marked and the marking

0005134

head relative movement; and a control unit for controlling the above-mentioned means for current supply and relative movement so that said at least one electrode can be caused to mark the metal object to form a character in matrix form on said object.

11. An apparatus as claimed in claim 10, characterized in that the marking head includes a number, preferably five or seven, of electrodes arranged sequentially spaced from each other, and in that means are provided for causing the marking head and metal object relative movement substantially transverse to the general sequence direction and substantially along the surface of the metal object to be marked.

0005134

## Fig. 1

## Fig. 2

## Fig. 3

0005134

Fig. 4